# EUROPEAN PATENT SPECIFICATION

(11) **EP 1 472 057 B1**
(45) Date of publication and mention of the grant of the patent: **15.11.2006**
(21) Application number: 03708943.0
(22) Date of filing: 03.02.2003
(51) Int. Cl.: B26D 7/06

(54) **METHOD AND APPARATUS FOR DELIVERING PRODUCT TO A CUTTING DEVICE**
VERFAHREN UND VORRICHTUNG ZUR LIEFERUNG VON EINEM PRODUKT ZU EINER SCHNEIDEVORRICHTUNG
PROCEDE ET APPAREIL PERMETTANT DE FOURNIR UN PRODUIT A UN DISPOSITIF DE COUPE

(30) Priority: 04.02.2002 US 72494; 07.10.2002 US 416653 P
(43) Date of publication of application: 03.11.2004
(73) Proprietor: URSCHEL LABORATORIES, INC., Valparaiso Indiana 46383 (US)
(72) Inventor: BUCKS, Brent, L., Valparaiso, IN 46383 (US); KING, Daniel, W., Valparaiso, IN 46305 (US)
(74) Representative: Britter, Keith Palmer
(86) International application number: PCT/US2003/003182
(87) International publication number: WO 2003/066290

(56) References cited:
- DE-A- 3 934 143
- NL-C- 1 006 794
- US-A- 5 343 791
- US-A- 5 992 284

## Description

### BACKGROUND OF THE INVENTION

### (1) FIELD OF THE INVENTION

The present invention generally relates to cutting methods and equipment. More particularly, this invention relates to a method and apparatus for delivering food product to a cutting device having a horizontal cutting plane, according to the preambles of claim 1 and 16, by which the product is properly oriented and stabilized to produce a sliced product of uniform thickness. An example of a method and a device disclosing the features of the preambles of claims 1 and 16 is shown in US-A-5 343 791.

### (2) DESCRIPTION OF THE RELATED ART

Various types of equipment are known for slicing, shredding and granulating food products such as vegetables, fruits and meat products. A particular example is slicing equipment adapted for cutting root vegetables, such as potatoes, into thin slices suitable for making potato chips (also known as potato crisps). A widely used machine for this purpose is commercially available from the assignee of the present invention under the name Urschel Model CC. The Model CC is a centrifugal-type slicer capable of producing uniform slices, strip cuts, shreds and granulations of a wide variety of food products at high production capabilities. The centrifugal operation of the Model CC does not provide for orienting an elongate product so that its longitudinal axis is perpendicular to the cutting blades. Therefore, when used to produce potato slices for potato chips, the Model CC requires the use of substantially round potatoes in order to produce the desired circular chip shape with a minimum amount of scrap.

Because potatoes tend to have an elongated shape, round potatoes of the type that can be processed with the Model CC typically cost more, generally as a result of the special potato varietals and/or farming techniques required to produce a rounder shape. In view of this additional cost, it would be desirable if potato chips with the desired circular shape could also be produced from potato varietals with elongate shapes. It is also of ongoing interest in the industry to achieve greater chip consistency in terms of shape and thickness, while minimizing scrap.

The TranSlicer 2000® is a slicing apparatus that has found wide use for slicing elongate food products. Commercially available from the assignee of the present invention and disclosed in U.S. Patent No. 6,148,702 to Bucks, the TranSlicer 2000® employs a cutting wheel disposed in a vertical plane and rotated on a horizontal axis, with radial cutting blades mounted between a hub and an annular-shaped rim. A notable example of a cutting wheel suitable for use with the TranSlicer 2000® is disclosed in commonly-assigned U.S. Patent Nos. 5,992,284 and 6,148,709 to Bucks. A conveyor or other suitable device is required to deliver product horizontally to the cutting wheel. The cutting operation performed by the TranSlicer 2000® is generally limited to the hemisphere of the cutting wheel in which the blades are traveling downward, because attempting to cut a product as the blade travels upward tends to lift the product off the conveyor.

The TranSlicer 2000® is well suited for slicing, shredding and granulating a wide variety of fruits, vegetables and meat products, including the slicing of elongate potatoes for potato chip production. However, a difficulty arises when attempting to produce crinkled slices (slices having a corrugated shape when viewed edgewise) or "V-slices" (similar to crinkled but with relative sharp peaks and valleys when viewed edgewise), both of which are common shapes for potato chips. As noted above, the TranSlicer 2000 ® is generally limited to a cutting operation performed in the hemisphere of the cutting wheel in which the blades are traveling downward. Even when being sliced in a downward direction, an elongate product can rotate slightly about its longitudinal axis for lack of a means for positively holding the product while engaged with the blade. While this aspect is of no significance when slicing most elongate products to produce flat slices, any rotation of an elongate potato that occurs when attempting to produce crinkled or V-slice chips results in the grooved pattens on opposite surfaces of a chip being misaligned, which can be aesthetically undesirable, cause uneven cooking, and produce shredded product if the chips are sliced sufficiently thin, e.g., on the order of about two mm or less.

**[0005a]** US-A-5343791 discloses an apparatus for delivering individual elongate food products to a means for cutting in a substantially horizontal plane through the products, the apparatus comprising a passage extending downwardly towards the cutting means and defining an opening in proximity to the cutting means, guide means disposed along a first portion of the passage, and means for applying a force on each of the products travelling downwardly through the passage.

In view of the above, it would be desirable if an improved method and apparatus were available that enabled potatoes and other elongate products to be properly oriented and stabilized during a slicing operation. Such a method and apparatus would preferably be suitable for producing crinkled and V-slice potato chips while preferably achieving high production capabilities and minimizing scrap.

### BRIEF SUMMARY OF THE INVENTION

The present invention provides a method and apparatus by which potatoes and other elongate food products can be properly oriented and stabilized during a slicing operation, while also enabling high production capabilities and minimizing scrap. The method and apparatus of this invention particularly provide for delivering food product to a cutting device having a horizontal cutting plane, which can therefore make use of gravity to deliver the product to the cutting device, but requires that the product is properly oriented and stabilized after travelling in a downward direction to the cutting device.

The apparatus of this invention accomplishes these objectives and solves the above-mentioned problems by means of an apparatus having all the features of claim 1.

Accordingly, the method of this invention entails a method having all the features of claim 16.
According to one preferred aspect of the invention, during delivery of the elongate products to the passage the elongate products are separated and longitudinally aligned with the passage so that the elongate products enter and travel through the passage with the longitudinal axes of the elongate products substantially parallel to the passage.

In view of the above, it can be see that a significant advantage of this invention is that potatoes and other elongate food products can be properly oriented and stabilized during a slicing operation by delivering the product in a downward direction to a substantially horizontal cutting device. Orientation and stabilization of the product are achieved by applying a sufficient lateral force on the product to maintain the product in contact with means capable of maintaining the orientation of the product within the passage. Another significant advantage of this invention is that the use of a substantially horizontal cutting device allows the entire cutting plane to be used in performing the cutting operation, since the cutting action does not have any tendency to lift or otherwise disorient the product during the cutting operation. As such, the method and apparatus of this invention can be used to achieve high production capabilities while minimizing scrap.

Other objects and advantages of this invention will be better appreciated from the following detailed description.

### BRIEF DESCRIPTION OF THE DRAWINGS

Figure 1 is a side view of a product delivery and slicing system in accordance with this invention.

Figure 2 is a plan view of the delivery and slicing system of Figure 1.

Figure 3 is a plan view of a delivery tube and cutting wheel of the delivery and slicing system of Figure 1.

Figure 4 is a plan view of the delivery tube of Figure 3, and shows a food product traveling through the tube toward the cutting wheel beneath the tube.

Figure 5 is a cross-sectional view of the delivery tube and a blade of the cutting wheel of Figure 3.

Figure 6 is a cross-sectional view corresponding to Figure 5, and shows food product traveling downward through the tube into engagement with a blade of the cutting wheel.

Figure 7 is a longitudinal cross-sectional view of a feed tube for a cutting machine in accordance with a particular embodiment of this invention.

Figure 8 is an end view of the lower end of the feed tube of Figure 7.

### DETAILED DESCRIPTION OF THE INVENTION

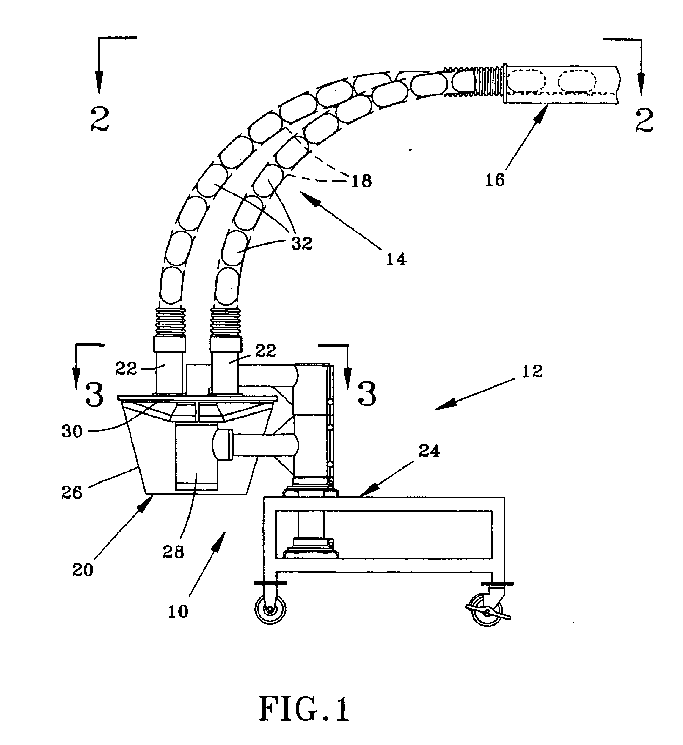

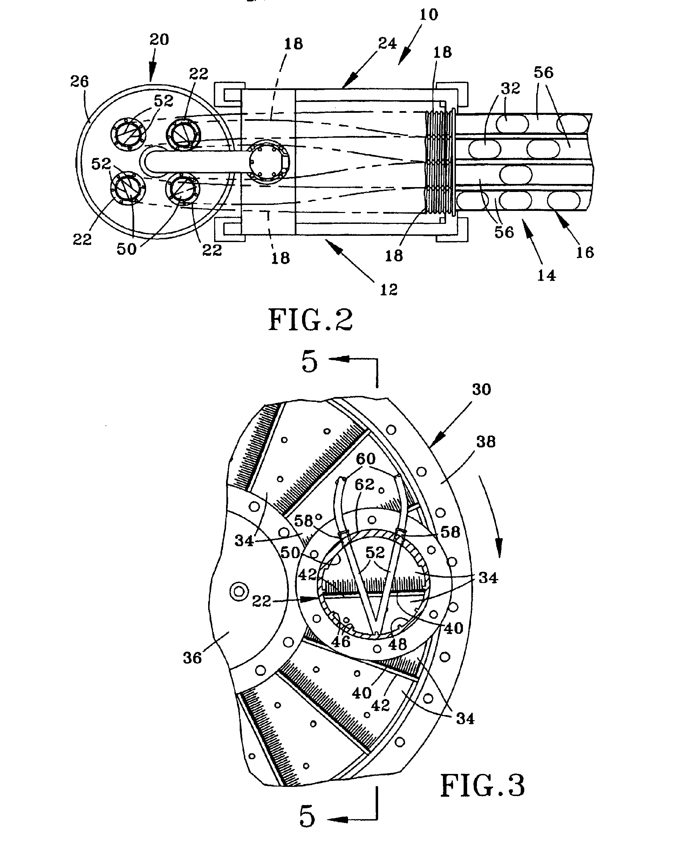

Figures 1 and 2 are side and plan views, respectively, of processing unit 10 for producing sliced food product in accordance with the present invention. The processing unit 10 includes a system 14 for delivering food product 32 to an apparatus 12 with which the slicing operation is performed. The apparatus 12 generally comprises a slicing unit 20 and a frame 24 by which the slicing unit 20 is mounted and supported above the surrounding floor. The slicing unit 20, shown with its interior visible in Figure 1, includes an enclosure 26, an internally-mounted electric motor 28, and a horizontal cutting wheel 30 housed within the enclosure 26 and driven by the motor 28. The enclosure 26 defines a chute from whose lower end the sliced food product exits the slicing unit 20. The frame 24 preferably houses the electrical wiring for powering the motor 28 and controls for operating the processing unit 10.

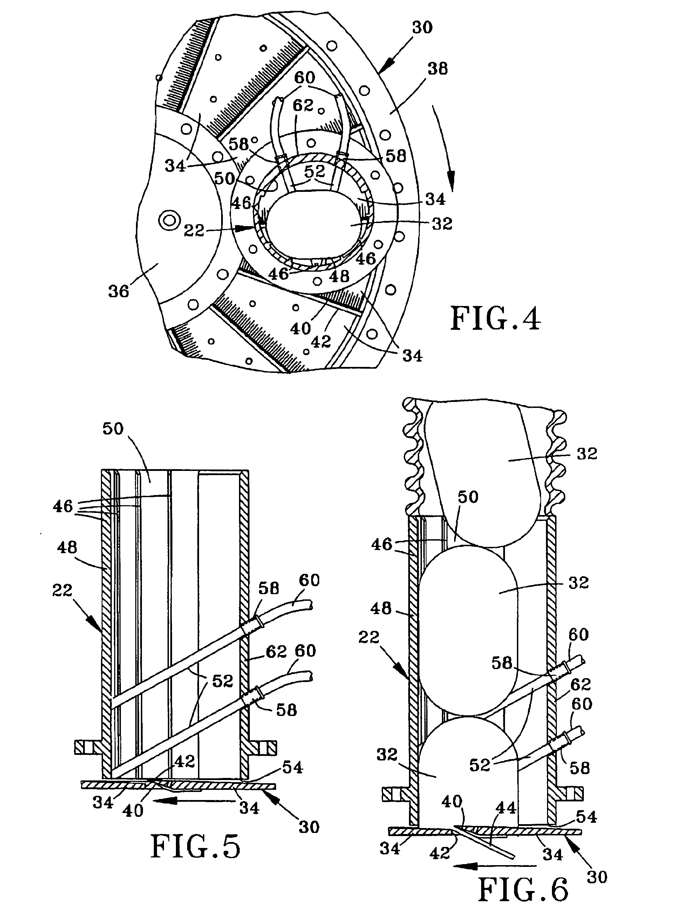

The product delivery system 14 includes a conveyor 16 and flexible tubes 18 that deliver the product 32 to a number of feed tubes 22 mounted to the top of the slicing unit 20. The feed tubes 22 feed the product 32 to the cutting wheel 30 within the slicing unit 20. In Figure 2, portions of the flexible tubes 18 are omitted for clarity, providing a plan view of one embodiment for the feed tubes 22. Each of the feed tubes 22 is represented in Figures 2 through 8 as having generally circular cross-sectional shapes, though other shapes are possible, including tubes with square-shaped cross-sections. Each feed tube 22 provides a complete enclosure surrounding the product 32 as it is presented to the cutting wheel 30 through an opening 54 (Figures 5, 6 and 7) defined at the lower end of each tube 22. However, as will become apparent from the following discussion, the feed tubes 22 are not required to completely surround the product 32. While four feed tubes 22 are shown in Figure 2, it is foreseeable that any number of tubes 22 could be used, limited only by the surface area of the cutting wheel 30 relative to the size of the feed tubes 22.

The cutting wheel 30 can be of various designs, a preferred design being the Microslice® cutting wheel disclosed in U.S. Patent Nos. 5,992,284 and 6,148,709. As depicted in Figures 3 and 4, the cutting wheel 30 can be seen to generally comprise a number of radial blades 34 mounted between a hub 36 and an annular-shaped rim 38. In Figures 5 and 6, the blades 34 are seen as being closely spaced in the circumferential direction, with the cutting (leading) edge 40 of each blade 34 projecting above the trailing edge 42 of the preceding blade 34, thereby establishing the thickness of product slices 44 (Figure 6) produced by the cutting wheel 30. It is worth noting that the blades 34 shown in Figures 3 through 6 are depicted as having corrugated cutting edges 40 that produce crinkle slices, i.e., a corrugated or sinusoidal shape with rounded peaks and valleys when viewed edgewise. Alternatively, the blades 34 could have flat cutting edges to produce flat slices, or V-shaped cutting edges to produce "V-slices" with relative sharp peaks and valleys when viewed edgewise. If the blades 34 are equipped with corrugated or V-shaped cutting edges 40, the radial placement of each blade 34 relative to the preceding blade 40 will determine the appearance of the slices. If the peaks and valleys of the blades 34 are aligned, each peak on one surface of a slice will correspond to a valley on the opposite surface of the slice, such that the thickness of the slice is substantially uniform. However, if the peaks and valleys of the adjacent blades 34 are not aligned, the slices produced will be characterized by alternating thick and thin-walled sections (known as "phase shift"), and if sufficiently misaligned the product 32 may be shredded by the cutting wheel 30. Whether slices or shredded product are desired will depend on the intended use of the product. As will become apparent from the following discussion, the present invention enables the type of product desired to be accurately and reliably determined by the cutting wheel 30, instead of randomly determined by changes in the orientation of the product during the cutting operation.

From Figures 1 and 2, it can be seen that the delivery system 14 singulates and orients the product 32 before delivering the product 32 in a substantially vertical direction to the feed tubes 22, which are also shown as being vertically oriented. The generally vertical presentation of the product 32 is due to the substantially horizontal orientation of the cutting wheel 30. While the feed tubes 22 are shown as being oriented at about 90 degrees to the surface (plane) of the cutting wheel 30, it is foreseeable that other orientations could be used, depending on the angle at which cuts are desired through the product 32. However, the cutting wheel 30 is preferably disposed in the horizontal plane, and the feed tubes 22 are disposed at an angle of about 15 to about 90 degrees, preferably about 90 degrees, to the cutting wheel 30.

While horizontal cutting wheels with vertical product delivery are known in the prior art, product orientation typically is of importance only if the product 32 is elongate, as represented in the Figures. Product orientation becomes of particular concern if the slicing operation is to produce very thin slices, e.g., on the order of about three mm or less, and a consistent peripheral shape is desired for the slices, such as a true cross-section of the product 32 or a consistent diagonal (bias) slice through the product 32. Finally, product stability becomes critical if crinkled or V-slices are desired, because any rotation of the product 32 about its longitudinal axis or lateral movement of the product 32 (i.e., perpendicular to the product's longitudinal axis) will result in misalignment of the peaks and valleys in the opposite surfaces of the slices, resulting in a product having a crosshatched (lattice) appearance that may include patterns of holes if the slices are sufficiently thin. The slicing of elongate potatoes to produce round crinkle or V-slice chips is a primary example of these circumstances, and therefore will be referred to throughout this description. However, round potatoes and other food products with various shapes, round, elongate and even rectilinear, can be handled with the processing unit 10 of this invention.

In the embodiment of Figures 3 through 6, product stability during the cutting operation is achieved within the feed tubes 22 as a result of splines 46 or other suitable surface features present on the interior surface of a wall 48 of each feed tube 22, so as to project into a feed passage 50 defined by the tube 22. The splines 46 are shown oriented longitudinally to the axis of the tube 22, such that the splines 46 promote and maintain the orientation of the product 32 relative to the longitudinal axis of the tube 22. As seen in Figure 4, product 32 with diameters smaller than the feed passage 50 could become misaligned within the passage 50 unless the product 32 is forced to remain in contact with the splines 46 throughout its travel through the passage 50. For this purpose, the feed tubes 22 are shown as being equipped with fluid jets 52 emitted from nozzles 58 located in a wall 62 of the tube 22 opposite the splines 46. Water is the preferred fluid for the jets 52, though it is foreseeable that other fluids, including liquids and gases, could be used. Water is represented in Figures 3 through 6 as being delivered to each nozzle 58 through a hose 60, though a manifold or other fluid handling technique could be used to deliver the fluid to the nozzles 58.

According to a preferred aspect of the invention, the fluid jets 52 combine to apply a lateral force to the product 32 that is sufficient to push the product 32 into contact with the splines 46 and thereafter cause the product 32 to remain in contact with the splines 46 while being sliced with the cutting wheel 30, as depicted in Figure 6. As a result, the product 32 is inhibited from rotating about its longitudinal axis. According to another preferred aspect of the invention, multiple fluid jets 52 are employed to inhibit lateral movement of the product 32. For this purpose, two sets of two converging jets 52 are shown in Figures 3 through 6, though any number of jets could be used, and not necessarily in pairs. The pair of fluid jets 52 in a given set are preferably coplanar and flow in a downward direction, as seen from the side views of Figures 5 and 6. One set of jets 52 is located directly above the other set, as can be discerned from the plan views of Figures 3 and 4. In Figures 5 and 6, the jets 52 are shown oriented at an acute angle to horizontal (and therefore to the cutting wheel 30) of up to about forty-five degrees, though the jets 52 could be oriented at other angles to horizontal, or horizontal and therefore parallel to the cutting wheel 30. Orienting the jets 52 to project at an angle toward the cutting wheel 30 is preferred to assist in stabilizing the product 32 while undergoing cutting by the blades 34, as well as assisting in feeding the product 32 downward through the tubes 22. In practice, an angle of about 30 degrees from horizontal in a direction toward the cutting wheel 30 has produced excellent results.

In Figure 3, the pairs of jets 52 are depicted as converging to intersect at the opposite wall 48 of the feed tube 22. However, it is foreseeable that the jets 52 of a given pair could intersect some distance away from the tube wall 48, or not intersect at all. Of primary interest is that the jets 52 converge to inhibit lateral movement of the product 32, and thus promote the stability of the product 32 while within the passage 30 and particularly while the product 32 is subject to the forces applied by the blades 34 during the cutting operation. For this purpose, the jets 52 are preferably oriented to have an included angle of more than zero to less than 180 degrees, with a suitable angle between the jets 52 being up to about ninety degrees. In practice, an angle of about 30 degrees between the jets 52 has worked well. In addition, the stability of the product 32 is believed to be promoted if the jets 52 intersect at a point on the wall 48 of the tube 22 directly above the point at which the trailing edges 42 of the blades 34 last pass beneath the opening 54 of the tube 22 above the cutting wheel 30, as apparent from Figure 3.

The force required to be applied to the product 32 in order to maintain the product 32 in contact with the splines 46 will depend in part on the mass and density of the product 32 and the speed of the blades 34. In practice, elongate potatoes of a size typical size for use in producing potato chips can be firmly held by four water jets 52 arranged as shown in Figures 3 through 6, where each jet 52 is discharged at a pressure of about 20 to about 30 psi (about 1 to about 2 bar) from a nozzle 58 having an orifice diameter of about 6.3 mm. Under these conditions, the total water flow rate through each tube 22 is about 10 gallons per minute (about 40 liters/minute).

While the stabilizing force desired for cooperation with the splines 46 has been described as being generated by fluid jets 52, it is foreseeable that other means for applying a generally lateral force on product 32 could be used, such as springs, bladders, spring-loaded paddles or rollers, and brushes. Furthermore, because the product 32 is retained within the passage 50 by the splines 46 and not any wall portion (e.g., wall 48) of the feed tube 22 (for example, see Figure 6), it is possible that the passage 50 could be defined simply by a number of splines 46 or other longitudinal members and a force-applying means opposite the splines 46. However, in a preferred embodiment, each passage 50 is defined by a feed tube 22, and the periphery of each passage 50 is entirely enclosed by the tube walls 48 and 62 so that the fluid used in the jets 52 is contained and flows downwardly through the cutting wheel 30 with the sliced product. While suitable internal diameters for the tubes 22 will depend on the size of the particular product 32, a suitable diameter for tubes 22 used to deliver potatoes is about 3.5 to about 4 inches (about 9 to about 10 cm). Splines 46 for a tube 22 of this diameter are preferably spaced about 25 to about 30 degrees apart, and are present around about one-half of the circumference of the tube 22. Suitable dimensions for the splines 46 are a width of about 0.093 inch (about 2.4 mm) and a height of about 0.090 inch (about 2.3 mm).

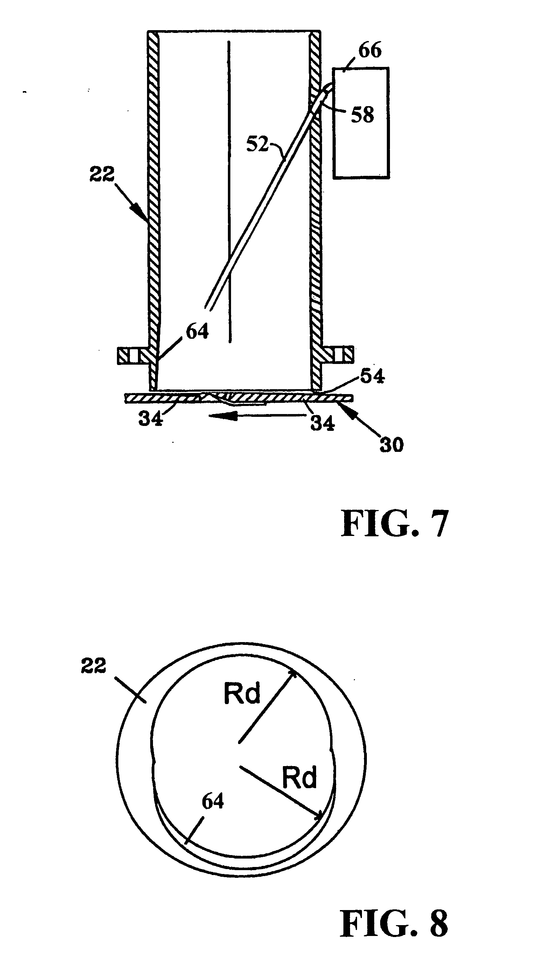

Figures 7 and 8 show a feed tube 22 in accordance with a preferred embodiment of the invention. Figure 7 corresponds to Figure 5, and as such shows the horizontal cutting wheel 30 equipped with multiple blades 34, and the feed tube 22 mounted above the wheel 30 for delivering products, such as potatoes, for slicing. As shown in Figure 7, and in accordance with the embodiment represented in Figures 2 through 6, the feed tube 22 is equipped with nozzles 58 that produce fluid (e.g., water) jets 52 for holding product against a wall of the tube 22. The nozzles 58 are preferably arranged in sets of two or more to produce jets 52 that intersect near the wall of the feed tube 22 opposite the nozzles 58. A single set of nozzles 58 is represented in Figure 1 in accordance with this embodiment of the invention. The water jets 52 are directed downward toward the cutting wheel 30, preferably at an angle of about twenty-five degrees from vertical (about 65 degrees from horizontal). This orientation, coupled with a pair of nozzles 58 having orifice diameters of about 4mm (0.156 inch) and supplied with water at a pressure of about 3.5 to 4.8 bar (50 to 70 psi), has been shown to improve stabilization and feed of product through the feed tubes 22 over the feed tube 22 shown in Figures 5 and 6, in which jets 52 at angles of up to about forty-five degrees from horizontal. Alternatively, it is believed that a set of three nozzles 58 having orifice diameters of about 2.75mm (0.108 inch) will produce similar results. As also shown in Figure 7, the water preferably flows to the nozzles 58 from a manifold 66 located near or on the tube 22, so as to better ensure that the desired pressure is achieved at the nozzles 58.

According to another aspect of the invention, the internal passage of the feed tube 22 is defined by two offset diameters, as seen in Figure 8. In contrast to the splined feed tube 22 shown in Figures 3 through 6, the internal wall of the feed tube 22 of Figures 7 and 8 is preferably smooth (unsplined), and has a smooth tapered flare 64 at the lower end of the tube 22. In Figure 8, which is a view looking upward at the lower end of the tube 22, the tube opening 54 can be seen as being asymmetrical as a result of the flare 64 being formed on less than the entire diameter of the tube 22. The flare 64 serves to trap and center round potatoes against the cutting wheel 30. A suitable radius (Rd) for the offset diameters is about 5.4cm (2.125 inches) (for a diameter of about 10.8cm (4.25 inches)), with an offset of about 8mm (5/16 inch).

In view of the importance of maintaining proper alignment of the product 32 within the feed tubes 22, it can be appreciated that proper presentation of the product 32 to the tubes 22 is also important. As depicted in Figures 1 and 2, the conveyor 16 of the product delivery system 14 preferably singulates and orients the elongate product 32 so that the longitudinal axis of each product 32 is essentially parallel to the flexible tube 18 that it enters for delivery to one of the feed tubes 22. This aspect of the invention is shown as being achieved by a conveyor with multiple lanes 56, each dedicated to delivering product 32 to one of the flexible tubes 18. A particularly suitable conveyor 16 for this purpose is an electromagnetic vibratory conveyor commercially available under the name Impulse from Key Technology, Inc. However, other devices for singulating product, elongate, round or otherwise, could be used.

While the invention has been described in terms of a preferred embodiment, it is apparent that other forms could be adopted by one skilled in the art. For example, the physical configuration of the processing unit 10, including the apparatus 12, delivery system 14, and slicing unit 20, could differ from that shown, and the physical and functional specifications of the invention could differ from those discussed. Therefore, the scope of the invention is to be limited only by the following claims.

## Claims

1. An apparatus (14) for delivering food product (32) to means (30) for cutting in a substantially horizontal plane through the product (32), the apparatus (14) comprising:
a passage (50) extending downwardly toward the cutting means (30) and defining an opening (54) in proximity to the cutting means (30);
guide means (46, 64) disposed along a first portion (48) of the passage(50); and
means (52) for applying a force on a product (32) travelling downwardly through the passage (50) so as to urge the product (32) into contact with the guide means (46, 64) during engagement with the cutting means (30),
**characterised in that** the force-applying means (52) comprises at least two fluid jets (52) flowing across the passage (50) toward the first portion (48).

2. An apparatus (14) according to claim 1, wherein the passage (50) is defined by a tubular member (22), the first portion (48) of the passage (50) comprises a first wall portion (48) of the tubular member (22), and the applying means (52) is located at an oppositely-disposed second wall portion (62) of the tubular member (22).

3. An apparatus (14) according to claim 1 or 2, wherein the at least two fluid jets (52) are coplanar and converge toward the first portion (48) of the passage (50).

4. An apparatus (14) according to claim 1, 2 or 3, wherein the at least two fluid jets (52) are disposed at an angle relative to each other of greater than 0 degrees and less than 180 degrees.

5. An apparatus (14) according to any preceding claim, wherein the at least two fluid jets (52) intersect at the first portion (48) of the passage (50).

6. An apparatus (14) according to any preceding claim, wherein each of the at least two fluid jets (52) flows in a downward direction at an angle of about 0 degrees to less than 90 degrees from horizontal.

7. An apparatus (14) according to any preceding claim, wherein the at least two fluid jets (52) are substantially coplanar and flow in a downward direction at an angle of about twenty-five degrees from vertical.

8. An apparatus (14) according to any preceding claim, wherein the passage (50) is disposed at an angle of about 90 degrees to the plane of the cutting means (30).

9. An apparatus (14) according to any preceding claim, wherein the guide means (46, 64) comprises splines (46) oriented substantially parallel to the passage (50).

10. An apparatus (14) according to any preceding claim, wherein the guide means (46, 64) comprises a flare (64) formed at the first portion (48) of the passage (50) adjacent the opening (54), the flare (64) being formed on less than the entire diameter of the passage (50).

11. An apparatus (14) according to claim 10, wherein the at least two fluid jets (52) cooperate with the flare (64) to cause the product (32) to be trapped and centered against the cutting means (30).

12. An apparatus (14) according to any preceding claim, wherein the cutting means (30) comprises a hub (36) at a vertical axis of rotation of the cutting means (30), and blades (34) extending radially from the hub (36).

13. An apparatus (14) according to claim 12, wherein each blade (34) of the cutting means (30) passes beneath the opening (54) in a direction toward the first portion (48) of the passage (50), wherein the first portion (48) has an exit point at which each of the blades (34) leaves the opening (54), and wherein the fluid jets (52) intersect directly above the exit point of the first portion (48).

14. An apparatus (14) according to, claim 12 or 13, wherein the blades (34) having cutting edges (40) that produce a crinkled or V-slice cut through the product (32).

15. An apparatus (14) according to any preceding claim further comprising means (16, 18) for delivering an elongate product (32) to the passage (50), the delivering means (16, 18) being operable to separate and longitudinally align an elongate product (32) with the passage (50) so that the elongate product (32) enters and travels through the passage (50) with a longitudinal axis of the elongate product (32) substantially parallel to the passage (50).

16. A method of delivering food product (32) to a means (30) for cutting in a substantially horizontal plane through the product (32), the method comprising the steps of:
providing a passage (50) extending downwardly toward the cutting means (30) and defining an opening (54) in proximity to the cutting means (30), the passage (50) comprising guide means (46, 64) disposed along a first portion (48) of the passage (50); and
applying a force on a product (32) travelling downwardly through the passage (50) so as to urge the product (32) into contact with the guide means (46, 64) during engagement with the cutting means (30),
**characterised in that** the force is applied by at least two fluid jets (52) flowing across the passage (50) toward the first portion (48).

17. A method according to claim 16, wherein the passage (50) is defined by a tubular member (22), the first portion (48) of the passage (50) comprises a first wall portion (48) of the tubular member (22), and the force is applied from an oppositely-disposed second wall portion (62) of the tubular member (22).

18. A method according to claim 16 or 17, wherein the at least two fluid jets (52) are coplanar and converge toward the first portion (48) of the passage (50).

19. A method according to claim 16, 17 or 18, wherein the at least two fluid jets (52) are disposed at an angle relative to each other of greater than 0 degrees and less than 180 degrees.

20. A method according to any of claims 16 to 19, wherein the at least two fluid jets (52) intersect at the first portion (48) of the passage (50).

21. A method according to any of claims 16 to 20, wherein each of the at least two fluid jets (52) flows in a downward direction at an angle of about 0 degrees to less than 90 degrees from horizontal.

22. A method according to any of claims 16 to 21, wherein the at least two fluid jets (52) are substantially coplanar and flow in a downward direction at an angle of about twenty-five degrees from vertical .

23. A method according to any of claims 16 to 22, wherein the guide means (46, 64) comprises a flare (64) formed at the first portion (48) of the passage (50) adjacent the opening (54), the flare (64) is formed on less than the entire diameter of the passage (50), and the at least two fluid jets (52) cooperate with the flare (64) to cause the product (32) to be trapped and centered against the cutting means (30).

24. A method according to any of claims 16 to 23, wherein the passage (50) is disposed at an angle of about 90 degrees to the cutting means (30) so that the product (32) travels in a direction substantially perpendicular to the cutting means (30).

25. A method according to any of claims 16 to 24, wherein the cutting means (30) rotates about a vertical axis and comprises a hub (36) at the vertical axis and blades (34) extending radially from the hub (36).

26. A method according to claim 25, wherein each blade (34) of the cutting means (30) passes beneath the opening (54) in a direction toward the first portion (48) of the passage (50), wherein the first portion (48) has an exit point at which each of the blades (34) leaves the opening (54), and wherein the fluid jets (52) intersect directly above the exit point of the first portion (48).

27. A method according to claim 25 or 26, wherein the blades (34) produce a crinkle or v-slice cut through the product (32).

28. A method according to any of claims 16 to 27 further comprising the step of delivering an elongate product (32) to the passage (50) so that the elongate product (32) is separated and longitudinally aligned with the passage (50), whereby the elongate product (32) enters and travels through the passage (50) with its longitudinal axis substantially parallel to the passage (50).

## Patentansprüche

1. Eine Vorrichtung zur Lieferung eines Nahrungsmittelprodukts (32) zu einer Vorrichtung (30) zum Schneiden in einer im Wesentlichen horizontalen Ebene durch das Produkt (32) hindurch, wobei die Vorrichtung aufweist:
einen Durchgang (50), der sich nach unten zu der Schneidevorrichtung (30) hin erstreckt und eine Öffnung (54) in der Nähe der Schneidevorrichtung (30) definiert;
eine Führungsvorrichtung (46, 64), die entlang eines ersten Abschnitts (48) des Durchgangs (50) angeordnet ist; und
eine Vorrichtung zum Anwenden von Kraft auf ein Produkt (32), das sich nach unten durch den Durchgang (50) hindurch bewegt, um so das Produkt (32) während der Erfassung durch die Schneidevorrichtung (30) in Kontakt mit der Führungsvorrichtung (46, 64) zu zwingen,
**dadurch gekennzeichnet, dass** die Vorrichtung zur Kraftanwendung (52) mindestens zwei Flüssigkeitsströme (52) aufweist, die über den Durchgang (50) zu dem ersten Abschnitt hin fließen.

2. Eine Vorrichtung (14) nach Anspruch 1, wobei der Durchgang (50) durch ein rohrförmiges Element (22) definiert ist, der erste Abschnitt (48) des Durchganges (50) einen ersten Wandabschnitt (48) des rohrförmigen Elements (22) aufweist und die Vorrichtung zur Kraftanwendung (52) sich an dem gegenüberliegend angeordneten zweiten Wandabschnitt (62) des rohrförmigen Elements (22) befindet.

3. Eine Vorrichtung (14) nach Anspruch 1 oder 2, wobei die mindestens zwei Flüssigkeitsströme (52) in der gleichen Ebene liegen und zu dem ersten Abschnitt (48) des Durchganges (50) hin konvergieren.

4. Eine Vorrichtung (14) nach Anspruch 1, 2 oder 3, wobei die mindestens zwei Flüssigkeitsströme (52) in einem Winkel zueinander angeordnet sind, der größer als 0 Grad und kleiner als 180 Grad ist.

5. Eine Vorrichtung (14) nach einem der vorhergehenden Ansprüche, wobei sich die mindestens zwei Flüssigkeitsströme (52) an dem ersten Abschnitt (48) des Durchganges (50) kreuzen.

6. Eine Vorrichtung (14) nach einem der vorhergehenden Ansprüche, wobei jeder der mindestens zwei Flüssigkeitsströme (52) in einem Winkel von etwa 0 Grad bis weniger als 90 Grad von der Horizontalen nach unten fließen.

7. Eine Vorrichtung (14) nach einem der vorhergehenden Ansprüche, wobei die mindestens zwei Flüssigkeitsströme (52) im Wesentlichen in der gleicher Ebene liegen und in einem Winkel von etwa fünfundzwanzig Grad von der Vertikalen aus nach unten fließen.

8. Eine Vorrichtung (14) nach einem der vorhergehenden Ansprüche, wobei der Durchgang (50) in einem Winkel von etwa 90 Grad zu der Ebene der Schneidevorrichtung (30) angeordnet ist.

9. Eine Vorrichtung (14) nach einem der vorhergehenden Ansprüche, wobei die Führungsvorrichtung (46, 64) Rippen (46) aufweist, die im Wesentlichen parallel zu dem Durchgang (50) ausgerichted sind.

10. Eine Vorrichtung (14) nach einem der vorhergehenden Ansprüche, wobei die Führungsvorrichtung (46, 64) eine Ausbauchung (64) aufweist, die an dem ersten Abschnitt (48) des Durchgangs (50) an die Öffnung (54) angrenzend gebildet ist, wobei die Ausbauchung (64) auf weniger als dem gesamten Durchmesser des Durchgangs (50) gebildet ist.

11. Eine Vorrichtung (14) nach Anspruch (10), wobei die mindestens zwei Flüssigkeitsströme (52) mit der Ausbauchung (64) in solcher Weise zusammenwirken, dass das Produkt (32) eingeklemmt und gegen die Schneidevorrichtung (30) zentriert wird.

12. Eine Vorrichtung (14) nach einem der vorhergehenden Ansprüche, wobei die Schneidevorrichtung (30) eine Nabe (36) an einer vertikalen Rotationsachse der Schneidevorrichtung (30), sowie sich radial von der Nabe (36) erstreckende Schneideblätter (34) aufweist.

13. Eine Vorrichtung (14) nach Anspruch 12, wobei jedes Schneideblatt (34) der Schneidevorrichtung (30) unterhalb der Öffnung (54) in Richtung des ersten Abschnittes (48) des Durchgangs (50) durchgeht, wobei der erste Abschnitt (48) eine Auslassstelle hat, an der jedes der Schneideblätter (34) die Öffnung (54) verlässt, und wobei sich die Flüssigkeitsströme (52) direkt oberhalb der Auslassstelle des ersten Abschnitts (48) kreuzen.

14. Eine Vorrichtung (14) nach Anspruch 12 oder 13, wobei die Schneideblätter (34) Schneidkanten (40) besitzen, die einen gewellten oder V-förmigen Schnitt durch das Produkt (32) hindurch erzeugen.

15. Eine Vorrichtung (14) nach einem der vorhergehenden Ansprüche, die weiterhin eine Vorrichtung zur Lieferung eines länglichen Produktes (32) zu dem Durchgang (50) aufweist, wobei die Lieferungsvorrichtung (16, 18) betrieben werden kann, um ein längliches Produkt (32) zu trennen und der Länge nach mit dem Durchgang (50) auszurichten, derart, dass das längliche Produkt in den Durchgang (50) eintritt und durch diesen hindurch geht, wobei eine Längsachse des länglichen Produkts (32) im Wesentlichen parallel zu dem Durchgang (50) ist.

16. Ein Verfahren zur Lieferung eines Nahrungsmittelprodukts (32) zu einer Vorrichtung (30) zum Durchschneiden des Produkts (32) in einer im Wesentlichen horizontalen Ebene, wobei das Verfahren folgende Schritte aufweist:
Bereitstellen eines Durchgangs (50), der sich nach unten zu der Schneidevorrichtung (30) hin erstreckt und eine Öffnung (54) in der Nähe der Schneidevorrichtung (30) definiert, wobei der Durchgang (50) eine Führungsvorrichtung (46, 64) aufweist, die entlang eines ersten Abschnitts (48) des Durchgangs (50) angeordnet ist; und
Anwenden von Kraft auf ein Produkt (32), das sich durch den Durchgang (50) hindurch nach unten bewegt, um so das Produkt (32) während der Erfassung durch die Schneidevorrichtung (30) in Kontakt mit der Führungsvorrichtung (46, 64) zu zwingen,
**dadurch gekennzeichnet, dass** die Kraft von mindestens zwei Flüssigkeitsströmen (52) ausgeübt wird, die über den Durchgang (50) zu dem ersten Abschnitt (48) hin fließen.

17. Ein Verfahren nach Anspruch 16, wobei der Durchgang (50) durch ein rohrförmiges Element (22) definiert ist, der erste Abschnitt (48) des Durchgangs (50) einen ersten Wandabschnitt (48) des rohrförmigen Elements (22) aufweist und die Kraft von einem gegenüberliegend angeordneten zweiten Wandabschnitt (62) des rohrförmigen Elements (22) aus angewandt wird.

18. Ein Verfahren nach Anspruch 16 oder 17, wobei die mindestens zwei Flüssigkeitsströme (52) in der selben Ebene verlaufen und zu dem ersten Abschnitt (48) des Durchgangs (50) hin konvergieren.

19. Ein Verfahren nach Anspruch 16, 17 oder 18, wobei die mindestens zwei Flüssigkeitsströme (52) in einem Winkel zueinander angeordnet sind, der größer als 0 Grad und kleiner als 180 Grad ist.

20. Eine Verfahren nach einem der Ansprüche 16 bis 19, wobei sich die mindestens zwei Flüssigkeitsströme (52) an dem ersten Abschnitt (48) des Durchganges (50) kreuzen.

21. Eine Verfahren nach einem der Ansprüche 16 bis 20, wobei jeder der mindestens zwei Flüssigkeitsströme (52) in einem Winkel von etwa 0 Grad bis weniger als 90 Grad von der Horizontalen aus nach unten fließen.

22. Ein Verfahren nach einem der Ansprüche 16 bis 21, wobei die mindestens zwei Flüssigkeitsströme (52) im Wesentlichen in der gleichen Ebene verlaufen und in einem Winkel von etwa fünfundzwanzig Grad von der Vertikalen aus nach unten fließen

23. Ein Verfahren nach einem der Ansprüche 16 bis 22, wobei die Führungsvorrichtung (46, 64) eine Ausbauchung (64) aufweist, die an dem ersten Abschnitt (48) des Durchgangs (50) an die Öffnung (54) angrenzend gebildet ist, die Ausbauchung (64) auf weniger als dem gesamten Durchmesser des Durchgangs (50) gebildet ist, und die mindestens zwei Flüssigkeitsströme (52) mit der Ausbauchung (64) in solcher Weise zusammenwirken, dass das Produkt (32) eingeklemmt und gegen die Schneidevorrichtung (30) zentriert wird.

24. Ein Verfahren nach einem der Ansprüche 16 bis 23, wobei der Durchlass (50) in einem Winkel von etwa 90 Grad zu der Schneidevorrichtung (30) angeordnet ist, derart, dass sich das Produkt (32) in einer Richtung fortbewegt, die im Wesentlichen senkrecht zu der Schneidevorrichtung (30) liegt.

25. Ein Verfahren nach einem der Ansprüche 16 bis 24, wobei sich die Schneidevorrichtung (30) um eine vertikale Achse dreht und eine Nabe (36) an der vertikalen Achse sowie sich radial von der Nabe (36) erstreckende Schneideblätter (34) aufweist.

26. Ein Verfahren nach Anspruch 25, wobei jedes Schneideblatt (34) der Schneidevorrichtung (30) unterhalb der Öffnung (54) in Richtung des ersten Abschnittes (48) des Durchgangs (50) durchgeht, wobei der erste Abschnitt (48) eine Auslassstelle hat, an der jedes der Schneideblätter (34) die Öffnung (54) verlässt, und wobei sich die Flüssigkeitsströme (52) direkt oberhalb der Auslassstelle des ersten Abschnitts (48) kreuzen.

27. Ein Verfahren nach Anspruch 25 oder 26, wobei die Schneideblätter (34) einen gewellten oder V-förmigen Schnitt durch das Produkt (32) hindurch erzeugen.

28. Ein Verfahren nach einem der Ansprüche 16 bis 27, das weiterhin den Schritt des Zuführens eines länglichen Produktes (32) zu dem Durchgang (50) aufweist, derart, dass das längliche Produkt (32) getrennt wird und der Länge nach mit dem Durchgang (50) ausgerichtet wird, wodurch das längliche Produkt (32) in den Durchgang (50) eintritt und durch diesen hindurch geht, wobei seine Längsachse im Wesentlichen parallel zu dem Durchgang (50) ist.

## Revendications

1. Appareil (14) pour amener un produit alimentaire (32) vers des moyens (30) pour le découpage du produit (32) dans un plan substantiellement horizontal, l'appareil comprenant :
un passage (50) se prolongeant vers le bas en direction du moyen de découpe (30) et définissant une ouverture (54) à proximité du moyen de découpe (30),
des moyens de guidage (46, 64) disposés le long de la première portion (48) du passage (50), et
un moyen (52) pour appliquer une force sur le produit (32) se déplaçant vers le bas dans le passage (50) de façon à presser le produit (32) pour qu'il soit en contact avec les moyens de guidage (46, 64) pendant l'engagement avec le moyen de découpe (30),
**caractérisé par le fait que** le moyen d'application de la force (52) comprend au moins deux jets de liquide (52) projetés à travers le passage (50) en direction de la première portion (48).

2. Appareil (14) selon la revendication 1, dans lequel le passage (50) est défini par un élément tubulaire (22) la première portion (48) du passage (50) comprenant une première portion de paroi (48) de l'élément tubulaire (22), et le moyen d'application (52) se trouvant sur une seconde portion de paroi (62) située à l'opposé de l'élément tubulaire (22).

3. Appareil (14) selon la revendication 1 ou 2, dans lequel au moins les deux jets de liquide (52) sont coplanaires et convergent en direction de la première portion (48) du passage (50).

4. Appareil (14) selon la revendication 1, 2 ou 3, dans lequel au moins les deux jets de liquide (52) sont disposés à un angle, l'un par rapport à l'autre, supérieur à 0 degré et inférieur à 180 degrés.

5. Appareil (14) selon l'une quelconque des revendications précédentes, dans lequel au moins les deux jets de liquide (52) se croisent au niveau de la première portion (48) du passage (50).

6. Appareil (14) selon l'une quelconque des revendications précédentes, dans lequel chacun au moins des deux jets de liquide (52) est dirigé vers le bas selon un angle compris entre environ 0 degré et moins de 90 degrés par rapport à l'horizontale.

7. Appareil (14) selon l'une quelconque des revendications précédentes, dans lequel au moins les deux jets de liquide (52) sont substantiellement coplanaires et s'écoulent en direction du bas à un angle d'environ vingt-cinq degrés par rapport à la verticale.

8. Appareil (14) selon l'une quelconque des revendications précédentes, dans lequel le passage (50) est disposé à un angle d'environ 90 degrés par rapport au plan du moyen de découpe (30).

9. Appareil (14) selon l'une quelconque des revendications précédentes, dans lequel le moyen de guidage (46, 64) comprend des cannelures (46) orientées de façon substantiellement parallèle au passage (50).

10. Appareil (14) selon l'une quelconque des revendications précédentes, dans lequel les moyens de guidage (46, 64) comprennent un évasement (64) formé au niveau de la première portion (48) du passage (50) adjacent à l'ouverture (54), l'évasement (64) n'étant pas formé sur la totalité du diamètre du passage (50).

11. Appareil (14) selon la revendication 10, dans lequel au moins les deux jets de liquide (52) coopèrent avec l'évasement (64) pour que le produit (32) soit emprisonné et centré contre le moyen de découpe (30).

12. Appareil (14) selon l'une quelconque des revendications précédentes, dans lequel le moyen de découpe (30) comprend un moyeu (36) avec un axe de rotation vertical du moyen de découpe (30), et les lames (34) se prolongent radialement par rapport au moyeu (36).

13. Appareil (14) selon la revendication 12, dans lequel chaque lame (34) du moyen de découpe (30) passe sous une ouverture (54) en direction de la première portion (48) du passage (50), dans lequel la première portion (48) a un point de sortie au niveau duquel chacune des lames (34) quitte l'ouverture (54), et dans lequel les jets de liquide (52) se croisent directement au-dessus du point de sortie de la première portion (48).

14. Appareil (14) selon la revendication 12 ou 13, dans lequel les lames (34) ayant des tranchants (40) qui forment une découpe plissée ou en V, découpent le produit (32).

15. Appareil (14) selon l'une quelconque des revendications précédentes, comprenant également des moyens (16, 18) pour amener un produit de forme allongée (32) dans le passage (50), les moyens d'amenée (16, 18) étant utilisables pour séparer et aligner dans le sens longitudinal un produit de forme allongée (32) dans le passage (50) de sorte que le produit de forme allongée (32) entre et traverse le passage (50) en ayant un axe longitudinal substantiellement parallèle à celui du passage (50).

16. Procédé pour envoyer un produit alimentaire (32) vers un moyen de découpe (30) pour la découpe du produit (32) selon un plan substantiellement horizontal, le procédé comprenant les étapes suivantes :
prévoir un passage (50) se prolongeant vers le bas en direction des moyens de découpe (30) et définissant une ouverture (54) à proximité du moyen de découpe (30), le passage (50) comprenant les moyens de guidage (46, 64) disposés le long d'une première portion (48) du passage (50) ; et
l'application d'une force sur le produit (32) se déplaçant vers le bas à travers le passage (50), de façon à presser le produit (32) contre les moyens de guidage (46, 64) pendant l'engagement avec le moyen de découpe (30),
**caractérisé par le fait que** la force est appliquée par au moins deux jets de liquide (52) traversant le passage (50) en direction de la première portion (48).

17. Procédé selon la revendication 16, dans lequel le passage (50) est défini par un élément tubulaire (22), la première portion (48) du passage (50) comprenant une première portion de paroi (48) de l'élément tubulaire (22), et la force étant appliquée depuis une seconde portion de paroi (62) disposée à l'opposé de l'élément tubulaire (22).

18. Procédé selon la revendication 16 ou 17, dans lequel au moins les deux jets de liquide (52) sont coplanaires et convergent vers la première portion (48) du passage (50).

19. Procédé selon la revendication 16, 17 ou 18, dans lequel au moins les deux jets de liquide (52) sont disposés à un angle l'un par rapport à l'autre supérieur à 0 degré et inférieur à 180 degrés.

20. Procédé selon l'une quelconque des revendications 16 à 19, dans lequel au moins les deux jets de liquide (52) se croisent au niveau de la première portion (48) du passage (50).

21. Procédé selon l'une quelconque des revendications 16 à 20, dans lequel chacun au moins des deux jets de liquide (52) est dirigé vers le bas selon un angle compris entre environ 0 degré et 90 degrés par rapport à l'horizontale.

22. Procédé selon l'une quelconque des revendications 16 à 21, dans lequel au moins les deux jets de liquide (52) sont substantiellement coplanaires et dirigés vers le bas selon un angle d'environ vingt-cinq degrés par rapport à la verticale.

23. Procédé selon l'une quelconque des revendications 16 à 22, dans lequel les moyens de guidage (46, 64) comprennent un évasement (64) formé au niveau de la première portion (48) du passage (50) adjacent à l'ouverture (54), l'évasement (64) n'étant pas formé sur l'intégralité du diamètre du passage (50), et au moins les deux jets de liquide (52) coopérant avec l'évasement (64) pour que le produit (32) soit maintenu et centré contre le moyen de découpe (30).

24. Procédé selon l'une quelconque des revendications 16 à 23, dans lequel le passage (50) est disposé à un angle d'environ 90 degrés par rapport au moyen de découpe (30) de sorte que le produit (32) se déplace dans un sens substantiellement perpendiculaire au moyen de découpe (30).

25. Procédé selon l'une quelconque des revendications 16 à 24, dans lequel le moyen de découpe (30) tourne autour d'un axe vertical et comprend un moyeu (36) placé dans un axe vertical et des lames (34) se prolongeant dans le sens radial par rapport au moyeu (36).

26. Procédé selon la revendication 25, dans lequel chaque lame (34) du moyen de découpe (30) passe sous l'ouverture (54) en direction de la première portion (48) du passage (50), dans lequel la première portion (48) a un point de sortie au niveau duquel chacune des lames (34) quitte l'ouverture (54), et dans lequel les jets de liquide (52) se croisent directement au-dessus du point de sortie de la première portion (48).

27. Procédé selon la revendication 25 ou 26, dans lequel les lames (34) produisent une découpe plissée ou en V dans le produit (32).

28. Procédé selon l'une quelconque des revendications 16 à 27 comprenant également l'étape de placer un produit (32) de forme allongée dans le passage (50) de sorte que le produit de forme allongée (32) soit séparé et aligné longitudinalement avec le passage (50), ce qui permet que le produit (32) entre et traverse le passage (50) en ayant son axe longitudinal substantiellement parallèle au passage (50).
